# EUROPÄISCHE PATENTSCHRIFT

(11) **EP 2 629 874 B1**
(45) Veröffentlichungstag und Bekanntmachung des Hinweises auf die Patenterteilung: **23.03.2016**
(21) Anmeldenummer: 11767168.5
(22) Anmeldetag: 06.10.2011
(51) Int. Cl.: B01D 35/027, B01D 35/143, B01D 35/157

(54) **FILTERVORRICHTUNG**
FILTER DEVICE
DISPOSITIF DE FILTRATION

(30) Priorität: 18.10.2010 DE 102010049974
(43) Veröffentlichungstag der Anmeldung: 28.08.2013
(73) Patentinhaber: Hydac Filtertechnik GmbH, 66280 Sulzbach/Saar (DE)
(72) Erfinder: SCHMITT, Ralf, 66636 Tholey (DE); SCHOLL, Thomas, 66740 Saarlouis (DE)
(74) Vertreter: Bartels, Martin Erich Arthur
(86) Internationale Anmeldenummer: PCT/EP2011/004985
(87) Internationale Veröffentlichungsnummer: WO 2012/052117

(56) Entgegenhaltungen:
- EP-A1- 2 236 779
- DE-A1-102004 014 149
- DE-A1-102006 011 844

## Beschreibung

Die Erfindung betrifft eine Filtervorrichtung mit mindestens einem Filterelement, das in einem Filtergehäuse aufnehmbar ist, das mit einem Fluidtank in Fluidverbindung ist und das zumindest eine Anschlusseinrichtung zur Bildung einer Fluidverbindung mit dem Filterelement aufweist, wobei das Filtergehäuse durch einen in den Tank eingeformten Filtertopf gebildet ist, an dessen Topfboden sich die der Elementaufnahme zugehörige Anschlusseinrichtung befindet.

Derartige Filtervorrichtungen sind in einer Vielzahl von Bau- und Ausführungsformen auf dem Markt frei erhältlich. Solche Filtervorrichtungen dienen vor allem dazu, Verschmutzungen in Fluiden, wie Hydrauliköl, aus diesen herauszufiltrieren. Verschmutzungen des Hydrauliköls erfolgen bei der Montage oder bei der Inbetriebnahme der jeweiligen Hydraulikanlage. Neben solchen Anfangsverschmutzungen kann es zu Verschmutzungen während des Betriebes kommen, beispielsweise durch Eindringen von Schmutz am Hydrauliktank aufgrund unzureichender Tankbelüftung, Rohrdurchführungen, Kolbenstangenabdichtungen und dergleichen mehr. Insbesondere bei Hydraulikanlagen von Arbeitsmaschinen, wie Erdbewegungsmaschinen, Baggern od. dgl., kann es dabei zu Verschmutzungen innerhalb des im Hydrauliktank bevorrateten Fluids kommen. Ferner kann es bei derartigen Anwendungen der Filtervorrichtung zweckmäßig sein, die Filtration unmittelbar im Bereich des Hydrauliktanks zu veranlassen, beispielsweise indem man die Filtervorrichtung direkt in den Tank einbaut.

Unter Einsatzbedingungen, wie sie bei einem Betrieb der Filtervorrichtung in Baumaschinen oder anderen im Freien zu betreibenden Arbeitsgeräten herrschen, muß wegen der anfallenden, höheren Verschmutzungsraten ein häufiger Filterelementwechsel durchgeführt werden. Im Zuge der Handhabung der jeweils verbrauchten, d.h. verschmutzten, Filterelemente besteht die Gefahr, dass es zu Verunreinigungen sowohl des Systems, d.h. insbesondere des Filtergehäuses und des Tanks, als auch der Umwelt kommt.

Aus der DE 10 2006 011 844 B4 geht ein Filterelement mit einem einen Innenraum begrenzenden Filtertopf mit einem Bodenteil, das einen Fluiddurchlass aufweist, mit einem im Innenraum des Filtertopfes befindlichen Filtermedium sowie mit einem durch den Fluiddruck ansteuerbaren Ventilkörper einer Ventileinrichtung am Fluiddurchlass des Bodenteils hervor, wobei der Ventilkörper einen schirmartigen, flexiblen Schließmantel aufweist, der im aufgespannten Zustand den Fluiddurchlass sperrt und durch den Fluiddruck in Richtung auf seine geschlossene Stellung hin bewegt, den Fluiddurchlass freigibt, wobei der Schließmantel in seinem Zentralbereich an einem Träger innerhalb des Filterelementes festgefegt ist und der Ringkörper des Bodenteils einen eine Ventilsitz-Dichtfläche bildenden, nach innen vorstehenden Ringrand ausbildet.

Durch die DE 10 2005 001 828 A1 ist eine Filtervorrichtung, insbesondere eine Armatur zur Bildung eines fluidführenden Anschlusses an einem Behälter aus Kunststoff bekannt, vorzugsweise in Form eines Tanks zur Aufnahme eines Fluids, namentlich einer Hydraulikflüssigkeit, wobei die Armatur ein Anschlussteil in Form eines Hohlkörpers aufweist, mit einem Mantel, der sich entlang einer Längsachse des Hohlkörpers zwischen Enden desselben erstreckt, wobei der Hohlkörper in den Kunststoff der Wand des Behälters derart eingebettet ist, dass ein offenes Ende des Hohlkörpers am Rand einer Öffnung des Behälters und zumindest ein Teilbereich des Mantels des Hohlkörpers vom Kunststoff der Wand des Behälters umgeben sind.

Der vorzugsweise aus metallischem Werkstoff gefertigte Hohlkörper ermöglicht nicht nur die betriebssichere Verbindung mit Anschluss- oder Anbauteilen, die Bestandteil eines zugehörigen Hydrauliksystems bilden, sondern trägt auch zur Verstärkung desjenigen Bereichs des Kunststoffbehälters oder -tanks mit bei, der sich im Bereich der Öffnung befindet.

Die DE 10 2004 014 149 A1 beschreibt eine Filtervorrichtung mit mindestens einem Filterelement, das in einem Filtergehäuse aufnehmbar ist, das über Fluidanschlüsse mit einer Fluideinrichtung mittels einer Anschlusseinrichtung fluidführend-verbindbar ist. An der Fluideinrichtung ist mittels einer Befestigungseinrichtung ein durch Verdrehen des Filtergehäuses verriegelbarer und lösbarer Bajonettverschluss vorgesehen. Die Anschlusseinrichtung ist mit mindestens einem bewegbaren Sperrteil versehen, das in einer Sperrstellung den ihm jeweils zuordenbaren Fluidanschluss sperrt und diesen nach Bewegen in eine Öffnungsstellung freigibt. Das Filtergehäuse ist durch einen in den Tank eingeformten Filtertopf gebildet, an dessen Topfboden sich die Anschlusseinrichtung befindet.

Was die Möglichkeiten der verhältnismäßig einfachen Formgebung, des geringen Gewichts sowie der Korrosionsbeständigkeit betreffend den Kunststofftank anbelangt, lässt die bekannte Lösung aber noch Wünsche offen. Auch ist die bekannte Lösung im Hinblick auf die Vielzahl an einzusetzenden Baukomponenten relativ aufwendig und mithin kostenintensiv in der Herstellung.

Ausgehend von diesem Stand der Technik stellt sich die Erfindung die Aufgabe, eine Filtervorrichtung der genannten Art zur Verfügung zu stellen, die eine betriebssichere, langzeitige, leckagefreie Anschlussverbindung an einer Öffnung eines Kunststoffbehälters oder Kunststofftanks ermöglicht, die die vorstehend beschriebenen Nachteile vermeiden hilft.

Eine dahingehende Aufgabe löst eine Filtervorrichtung mit den Merkmalen des Patentanspruches 1 in seiner Gesamtheit.

Gemäß dem kennzeichnenden Teil des Anspruchs 1 besteht eine wesentliche Besonderheit der Erfindung darin, dass am Topfboden des Filtertopfes ein einen Durchgang für den Anschlussstutzen bildendes, mit einem bodenseitigen Wandabschnitt des Tanks zusammenhängendes Verbindungsstück angeformt ist, durch das hindurch sich der Anschlussstutzen von der Tankaußenseite her in den Filtertopf erstreckt.

Das Filtergehäuse ist durch einen in den Tank eingeformten Filtertopf gebildet, an dessen Topfboden sich die der Elementaufnahme zugehörige Anschlusseinrichtung befindet. Dergestalt lässt sich ohne zusätzliche Einsetzkörper, metallische Hohlkörper oder dergleichen unmittelbar das Filterelement in den Filtertopf des Filtertanks einsetzen, was sich von der Herstellung relativ einfach realisieren lässt, wobei gleichzeitig eine hohe Dichtwirkung im Bereich der Einsatzstelle in den Tank erreicht ist, nebst entsprechender Gewichtsreduzierung, da die Anzahl der einzusetzenden Komponenten entsprechend reduziert werden kann. In besonders vorteilhafter Weise kommt dadurch ein in den Tank einzubauendes Filtergehäuse in Wegfall, weil der Filtertopf selbst als integraler Bestandteil des Tanks das Filtergehäuse bildet.

Mit besonderem Vorteil kann die Anordnung hierbei derart getroffen sein, dass sich der an das Verbindungsstück angrenzende Wandabschnitt des Tanks in einer sich vom Grund des Tanks nach oben erstreckenden, örtlichen Einbuchtung befindet. Dadurch eröffnet sich die Möglichkeit, den bodenseitigen An schluss vollständig in den Boden des Tanks zu "versenken", wodurch sich für den Einbau des Tanks in Arbeitsmaschinen mit geringem zur Verfügung stehendem Einbauraum Vorteile ergeben.

Vorzugsweise ist der Anschlussstutzen im Verbindungsstück durch eine Verschraubung festgelegt, wobei es sich um eine einfache Standard-Einschraublösung handeln kann.

Mit besonderem Vorteil kann der Tank zusammen mit dem einen integralen Bauteil desselben bildenden Filtertopf aus Kunststoff geformt sein.

Weiterhin kann in vorteilhafter Weise der an der Tankoberseite offene Filtertopf durch einen Kunststoffdeckel verschließbar sein, der mit einem am Randbereich des Filtertopfes befindlichen Innengewinde derart verschraubbar ist, dass der Deckel mit seiner Außenseite einen Teil der oberen Tankwand bildet. Bei derartigen Ausführungsbeispielen kann der Tank derart gestaltet sein, dass bei vom Tankboden ausgehendem Fluidanschluss der Tank mit einem Wandteil ein Außenhautteil der betreffenden, zugehörigen Arbeitsmaschine bildet und von der gesamten Filtervorrichtung lediglich der Deckel des Filtertopfes an der Außenhaut sichtbar ist.

Vorzugsweise ist ferner vorgesehen, dass die Anschlusseinrichtung für die Zufuhr des zu reinigenden Fluids zur Rohseite des Filterelements führt und Bestandteil der Elementaufnahme ist, mit der das in Funktionsposition befindliche Filterelement zusammenwirkt, wobei das Filterelement eine den Eingang zu seiner Rohseite normalerweise schließende Ventilanordnung aufweist, die bei Anbringen des Filterelementes an der Elementaufnahme öffenbar ist. Dadurch ist die Gefahr beseitigt, dass bei einem Filterelementwechsel Verschmutzungen, die am verbrauchten Filterelement rohseitig angelagert und/oder abgelagert sind, beim Abziehen des verbrauchten Filterelements von der Elementaufnahme aus dem Filterelement ausfallen und zur Reinseite gelangen können. In Verbindung mit einem Filterelementwechsel müssen daher keine nachträglichen Arbeitsgänge zur Reinigung des Filtergehäuses durchgeführt werden.

Bei besonders vorteilhaften Ausführungsbeispielen ist das Filtergehäuse durch einen in den Tank eingeformten Filtertopf gebildet, an dessen Topfboden sich die der Elementaufnahme zugehörige Anschlusseinrichtung befindet. In besonders vorteilhafter Weise kommt dadurch ein in den Tank einzubauendes Filtergehäuse in Wegfall, weil der Filtertopf selbst als integraler Bestandteil des Tanks das Filtergehäuse bildet.

Mit besonderem Vorteil ist die Anordnung hierbei so getroffen, dass ein von seinem inneren Filterhohlraum her zur Außenseite seines Filtermediums hin bei der Filtration durchströmbares Filterelement mit zumindest einer Endkappe vorgesehen ist, wobei diese bei Funktionsposition untere Endkappe für die Zusammenwirkung mit der Elementaufnahme einen in den Filterhohlraum ragenden Eingangsstutzen besitzt, an dem die Ventilanordnung angebracht ist und in den bei der Funktionsposition ein Anschlussstutzen der Anschlusseinrichtung als Bestandteil der Elementaufnahme unter Abdichtung eingreift.

Zur Bildung der Ventilanordnung kann das Ende des Eingangsstutzens von einer Kappe aus elastomerem Werkstoff überspannt sein, die derart mit Einschnitten versehen ist, dass der bei der Funktionsposition den Eingangsstutzen durchgreifende Anschlussstutzen der Anschlusseinrichtung durch mechanische Einwirkung auf die Kappe die Einschnitte der Kappe zu Durchströmschlitzen öffnet. Diese Bauweise der Ventilanordnung ist einfach und besonders kostengünstig herstellbar, so dass das Vorhandensein der Ventilanordnung am Filterelement dessen Herstellungskosten lediglich geringfügig erhöht.

Alternativ kann die Ventilanordnung am Eingangsstutzen einen bewegbaren Ventilkörper aufweisen, der durch mechanische Schließkraft in die den Eingangsstutzen sperrende Schließstellung vorgespannt und beim Anbringen des Filterelements an der Elementaufnahme durch mechanische Einwirkung des Anschlussstutzens gegen die Schließkraft aus der Schließstellung herausbewegbar ist. In vorteilhafter Weise ist auch bei dieser Ventilbauart, ebenso wie bei der Benutzung einer elastomeren Ventilkappe, für die Ventilbetätigung keinerlei konstruktiver Aufwand seitens der Anschlusseinrichtung erforderlich, weil in beiden Fällen die Ventilöffnung durch mechanisches Beaufschlagen mittels des Anschlussstutzens der Anschlusseinrichtung erfolgt, der bei der Funktionsposition des Filterelements dessen Eingangsstutzen durchgreift.

Nachstehend ist die Erfindung anhand von in der Zeichnung dargestellten Ausführungsbeispielen im Einzelnen erläutert. Es zeigen:
- Fig. 1: einen abgebrochen und mit vertikaler Schnittebene aufgeschnitten gezeichneten Teil eines Fluidtanks mit zugehöriger Filtervorrichtung gemäß einem Ausführungsbeispiel der Erfindung; und
- Fig. 2: eine der Fig. 1 entsprechende Darstellung mit einem zweiten Ausführungsbeispiel der Filtervorrichtung.

In der Zeichnung sind von einem Fluidtank 1, der zur Aufnahme eines Vorrats an Hydraulikflüssigkeit vorgesehen ist, lediglich ein oberer Wandabschnitt 3 und ein unterer Wandabschnitt 5 sichtbar, die zusammen mit nicht gezeigten, weiteren Wandteilen einen Innenraum 7 für Hydraulikflüssigkeit umgrenzen, dessen Füllspiegel bei 9 angedeutet ist. Der Tank 1 ist Bestandteil eines Hydrauliksystems einer Arbeitsmaschine, etwa in Form eines Kleinbaggers, wobei vom Hydrauliksystem lediglich eine Tank-Rücklaufleitung 11 dargestellt ist, über die Hydraulikflüssigkeit, die abgereinigt werden soll, der Filtervorrichtung zugeführt und nach erfolgter Reinigung von dieser wieder in den Innenraum 7 des Tanks 1 zurückgegeben wird.

Der Tank 1 ist aus einem für Hydraulikflüssigkeit kompatiblen Kunststoffmaterial in einem Rotationsformverfahren hergestellt, wobei durch Einrötieren ein Filtertopf 13 einstückig mit den Tankwänden geformt ist. Der an der Tankoberseite 15 offene Topf 13 erstreckt sich, bezogen auf die Einbaulage des Tanks 1, vertikal von der Tankoberseite 15 bis in die Nähe des Grundes des Tanks 1. Der Topfboden 17 weist eine zentral gelegene Anschlussöffnung 19 sowie seitlich von dieser gelegene Ausströmöffnungen 21 auf, über die abgereinigte Flüssigkeit aus dem Filtertopf 13 in den Innenraum 7 des Tanks 1 gelangt. An die Anschlussöffnung 19 am Topfboden 17 schließt sich ein Verbindungsstück 23 an, über das der Topfboden 17 mit dem unteren Wandabschnitt 5 des Tanks 1 in Verbindung ist. Wie aus der Zeichnung ersichtlich, ist eine Anschlussverbindung 27 der Rücklaufleitung 11 an der Filtervorrichtung innerhalb einer vom Grund des Tanks 1 nach oben ausgewölbten Einbuchtung 25 gelegen, so dass die Anschlussarmatur innerhalb des Tankbodens sozusagen "versenkt" ist.

Von der Anschlussverbindung 27 der Rücklaufleitung 11 erstreckt sich ein Anschlussstutzen 29 in Form eines an seiner Außenseite gestuften, zylindrischen Hohlkörpers durch das Verbindungsstück 23 und die Bodenöffnung 19 des Topfes 13 in dessen Innenraum, wobei sich das Ende 31 des Anschlussstutzens 29 in einem Abstand vom Topfboden 17 befindet. Der Anschlussstutzen 29 ist durch einen Gewindeeinsatz 33 im Verbindungsstück 23 festgelegt und bildet Bestandteil einer Elementaufnahme, die mit der unteren Endkappe 35 eines Filterelementes 37 zusammenwirkt, um dieses innerhalb des Filtertopfes 13 in seiner Funktionsposition festzulegen, wobei der Filtertopf 13 als Filtergehäuse fungiert.

Das in der Zeichnung in seiner Funktionsposition dargestellte Filterelement 37 weist an seiner unteren Endkappe 35, welche in üblicher Weise eine Einfassung für ein Filtermedium 39 bildet, das in Form eines Hohlzylinders einen inneren Filterhohlraum 41 umgibt, einen zentralen Eingangsstutzen 43 auf, der bei der Funktionsposition auf den Anschlussstutzen 29 aufsteckbar ist, wobei ein Dichtelement 45 am Eingangsstutzen 43 gegenüber dem Anschlusstutzen 29 abdichtet. Die Elementaufnahme vervollständigt ein Abstandhalterring 47 aus elastomerem Werkstoff, der den Eingangsstutzen 43 umgibt und die axiale Positionierung zwischen Endkappe 35 und Topfboden 17 vorgibt.

Der an der Tankoberseite 15 offene Filtertopf 13 ist durch einen Kunststoffdeckel 49 verschließbar, der mit einem am Randbereich des Filtertopfes 13 befindlichen Innengewinde 51 verschraubbar ist, so dass der Deckel 49 lediglich mit seiner Außenseite an der Tankoberseite 15 sichtbar ist. Eine zwischen Deckel 49 und oberer Endkappe 53 des Filterelements 37 befindliche Bypass-Ventilanordnung 55 gibt in üblicher Weise bei entsprechend anstehendem Differenzdruck eine Fluidverbindung zwischen dem inneren Filterhohlraum 41 und der Außenseite des Filterelements 37 frei, wobei die Schließfeder 57 das Bypassventil 55 in der geschlossenen normalen Betriebsstellung hält.

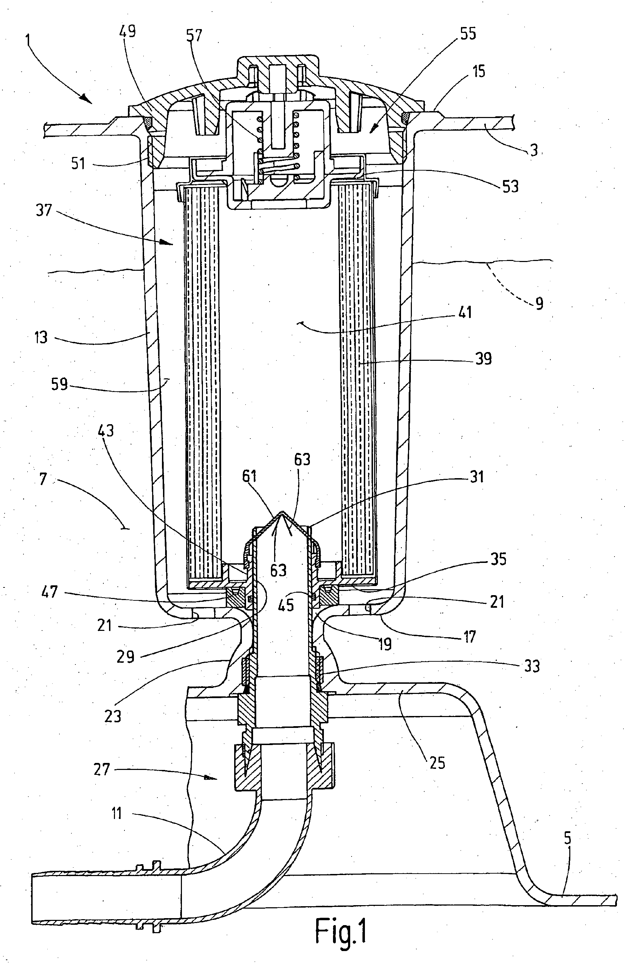

Bei der Filtration durchströmt die Hydraulikflüssigkeit, die über den Anschlussstutzen 29 in den Filterhohlraum 41 einströmt, das Filtermedium 39 von innen nach außen, so dass die abgereinigte Flüssigkeit aus dem das Filtermedium 39 umgebenden Raum des Filtertopfes 13, der die Reinseite 59 bildet, über die Ausströmöffnungen 21 in den Innenraum 7 des Tanks 1 zurückfließt. Bei dem Ausführungsbeispiel von Fig. 1 ist am freien, in den Filterhohlraum 41 ragenden Endbereich des Eingangsstutzens 43 eine Ventilanordnung vorgesehen, die aus einer das Ende des Eingangsstutzens 43 überspannenden Ventilkappe 61 aus elastomerem Material gebildet ist. Diese Kappe 61 weist mehrere Einschnitte 63 auf. Ohne auf die Ventilkappe 61 ausgeübte mechanische Einwirkung bildet die Ventilkappe 61 bei geschlossenen Einschnitten 63 einen Verschluss des Eingangsstutzens 43. Wenn jedoch das Filterelement 37, wie es in Fig. 1 dargestellt ist, in die Funktionsposition gebracht und mit dem Eingangsstutzen 43 auf den Anschlussstutzen 29 aufgesteckt ist, wird die Ventilkappe 61 durch mechanische Einwirkung des freien Endes 31 des Anschlussstutzens 29 derart aufgespannt, wie es in Fig. 1 gezeigt ist, wodurch die Einschnitte 63 zu Durchströmschlitzen geweitet werden, so dass für den Filtrationsvorgang Flüssigkeit durch den Anschlussstutzen 29 in den Filterhohlraum 41 einströmt. Wird jedoch für einen Elementwechsel das Filterelement 37 vom Anschlussstutzen 29 abgezogen, kehrt die Ventilkappe 61 in die nicht aufgeweitete Lage zurück, bei der die Kappe 61 bei geschlossenen Einschnitten 63 das Ende des Eingangsstutzens 43 verschließt. Somit ist vermieden, dass bei einem Filterelementwechsel Verschmutzungen, die sich im Filterhohlraum 41, d.h. der Rohseite, befinden, aus dem Filterelement 37 ausfallen und die Reinseite verschmutzen. Auch bei der Handhabung des aus dem Filtertopf 13 herausgenommenen, verbrauchten Filterelements 37 ist dadurch die Gefahr einer Verschmutzung der Umwelt verringert.

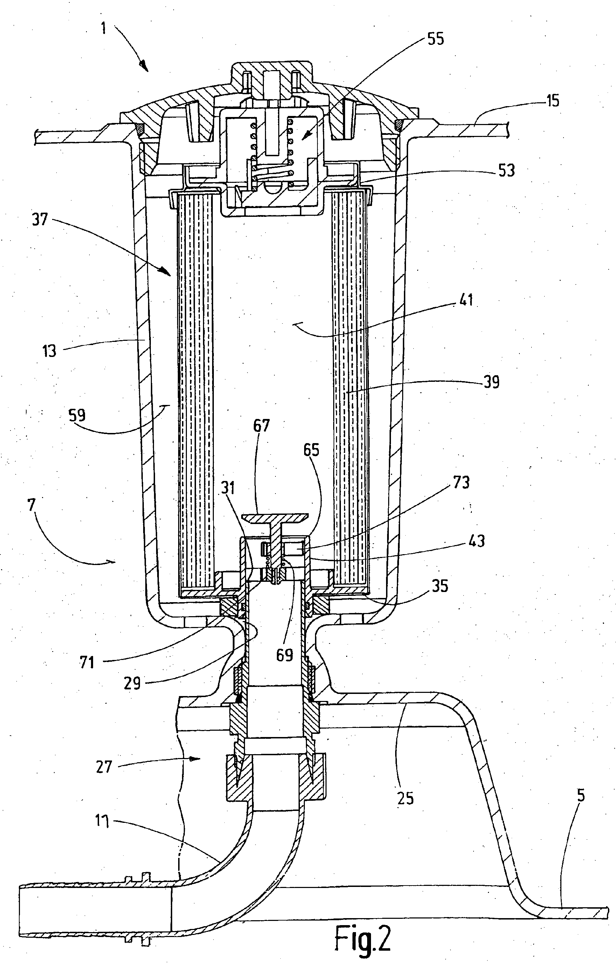

Das in Fig. 2 gezeigte Ausführungsbeispiel unterscheidet sich vom ersten Ausführungsbeispiel lediglich durch die Bauweise der Ventilanordnung am Eingangsstutzen 43 der Endkappe 35. Bei diesem Ausführungsbeispiel ist der Eingangsstutzen 43 ins Innere des Filterhohlraumes 41 hinein verlängert, so dass sich das freie Ende 65 des Eingangsstutzens 43 oberhalb des Endes 31 des Anschlussstutzens 29 befindet. Mit seinem freien Ende 65 bildet der Eingangsstutzen 43 einen Ventilsitz für einen tellerartigen Ventilkörper 67 der Ventilanordnung. Bei der in Fig. 2 gezeigten Funktionsposition ist der axial bewegbare Ventilkörper 67 gegen die Einwirkung einer Schließfeder 69 vom Ende des Eingangsstutzens 43 abgehoben, weil der Anschlussstutzen 29 mit seinem inneren Ende 31 einen Federträger 71, der innerhalb des Eingangsstutzens 43 bewegbar geführt ist, nach oben bewegt hat, wodurch der Ventilkörper 67 nach oben bewegt und vom Ventilsitz abgehoben wird, wobei die Schließfeder 69 zwischen dem Federträger 71 und einem im Eingangsstutzen 43 fest angeordneten zweiten Federträger 73 stärker zusammengepreßt wird. Wird nun das Filterelement 37 beim Elementwechsel von der Elementaufnahme abgezogen und aus dem Filtertopf 13 herausgenommen, dann bewegt sich der Ventilkörper 67 bei nur teilweiser Entspannung der Schließfeder 69 an den Ventilsitz am Ende 65 des Eingangsstutzens 43 und verschließt diesen. Somit ist die Funktionsweise des zweiten Ausführungsbeispiels die gleiche wie beim zuerst beschriebenen Beispiel. Da, mit Ausnahme der abweichenden Bauart der Ventilanordnung, bei beiden Ausführungsbeispielen die übrigen Komponenten vergleichbar sind, sind in Fig. 2 nicht sämtliche, bei beiden Ausführungsbeispielen gleich ausgebildete Einzelheiten beziffert.

## Patentansprüche

1. Filtervorrichtung mit mindestens einem Filterelement (37), das in einem Filtergehäuse aufnehmbar ist, das mit einem Fluidtank (1) in Fluidverbindung ist und das zumindest eine Anschlusseinrichtung (29) zur Bildung einer Fluidverbindung mit dem Filterelement (37) aufweist, wobei das Filtergehäuse durch einen in den Tank (1) eingeformten Filtertopf (13) gebildet ist, an dessen Topfboden (17) sich die der Elementaufnahme zugehörige Anschlusseinrichtung (29) befindet, **dadurch gekennzeichnet, dass** am Topfboden (17) des Filtertopfes (13) ein einen Durchgang für den Anschlussstutzen (29) bildendes, mit einem bodenseitigen Wandabschnitt (5) des Tanks (1) zusammenhängendes Verbindungsstück (23) angeformt ist, durch das hindurch sich der Anschlussstutzen (29) von der Tankaußenseite her in den Filtertopf (13) erstreckt.

2. Filtervorrichtung nach Anspruch 1, **dadurch gekennzeichnet, dass** sich der an das Verbindungsstück (23) angrenzende Wandabschnitt (5) des Tanks (1) in einer sich vom Grund des Tanks (1) nach oben erstreckenden, örtlichen Einbuchtung (25) befindet.

3. Filtervorrichtung nach einem der vorstehenden Ansprüche, **dadurch gekennzeichnet, dass** der Anschlussstutzen (29) im Verbindungsstück (23) durch eine Verschraubung (33) festgelegt ist.

4. Filtervorrichtung nach einem der vorstehenden Ansprüche, dadurch gekenntzeichnet, dass der Tank (1) zusammen mit dem ein integrales Bestandteil desselben bildenden Filtertopf (13) aus Kunststoff geformt ist.

5. Filtervorrichtung nach einem der vorstehenden Ansprüche, **dadurch gekennzeichnet, dass** der an der Tankoberseite (15) offene Filtertopf (13) durch einen Kunststoffdeckel (49) verschließbar ist, der mit einem am Öffnungsrandbereich des Filtertopfes (13) befindlichen Innengewinde (51) derart verschraubbar ist, dass der Deckel (49) mit seiner Außenseite einen Teil der oberen Tankwand bildet.

6. Filtervorrichtung nach einem der vorstehenden Ansprüche, **dadurch gekennzeichnet, dass** die Anschlusseinrichtung (29) für die Zufuhr des zu reinigenden Fluids zur Rohseite (41) des Filterelements (37) vorgesehen und Bestandteil der Elementaufnahme ist, mit der das in Funktionsposition befindliche Filterelement (37) zusammenwirkt, und dass das Filterelement (37) eine den Eingang zu seiner Rohseite (41) normalerweise schließende Ventilanordnung (61 ;67,69) aufweist, die bei Anbringen des Filterelements (37) an der Elementaufnahme öffenbar ist.

7. Filtervorrichtung nach einem der vorstehenden Ansprüche, **dadurch gekennzeichnet, dass** ein von seinem inneren Filterhohlraum (41) her zur Außenseite seines Filtermediums (39) hin bei der Filtration durchströmbares Filterelement (37) mit zumindest einer Endkappe (35) vorgesehen ist und dass diese bei Funktionsposition untere Endkappe (35) für die Zusammenwirkung mit der Elementaufnahme einen in den Filterhohlraum (41) ragenden Eingangsstutzen (43) besitzt, an dem die Ventilanordnung (61 ;67,69) angebracht ist und in den bei der Funktionsposition ein Anschlussstutzen (29) der Anschlusseinrichtung als Bestandteil der Elementaufnahme unter Abdichtung (45) eingreift.

8. Filtervorrichtung nach einem der vorstehenden Ansprüche, **dadurch gekennzeichnet, dass** zur Bildung der Ventilanordnung das innere Ende des Eingangsstutzens (43) von einer Kappe (61) aus elastomerem Werkstoff überspannt ist, die derart mit Einschnitten (63) versehen ist, dass der bei der Funktionsposition den Eingangsstutzen (43) durchgreifende Anschlussstutzen (29) der Anschlusseinrichtung durch mechanische Einwirkung auf die Kappe (61) deren Einschnitte (63) zu Durchströmschlitzen öffnet.

9. Filtervorrichtung nach einem der vorstehenden Ansprüche, **dadurch gekennzeichnet, dass** die Ventilanordnung am Eingangsstutzen (43) einen bewegbaren Ventilkörper (67) aufweist, der durch mechanische Schließkraft (69) in die den Eingangsstutzen (43) sperrende Schließstellung vorgespannt und beim Anbringen des Filterelementes (37) an der Elementaufnahme durch mechanische Einwirkung des Anschlussstutzens (29) gegen die Schließkraft (69) aus der Schließstellung heraus bewegbar ist.

## Claims

1. A filter device that has at least one filter element (37) that can be accommodated in a filter housing which is fluidically connected to a fluid tank (1) and that has at least one connection unit (29) for forming a fluidic connection to the filter element, the filter housing being formed by a filter bowl (13) that is moulded into the tank (1) and on the bottom (17) of which the connection unit (29) which belongs to the element receiver is located, **characterised in that** on the bottom (17) of the filter bowl (13) a connection piece (23) is moulded which is joined to a bottom-side wall section (5) of the tank (1), which forms a passage for the connection fitting (29), and through which the connection fitting (29) extends from the outside of the tank into the filter bowl (13).

2. The filter device according to Claim 1, **characterised in that** the wall section (5) of the tank (1) adjoining the connection piece (23) is located in a local indentation (25) which extends upward from the base of the tank (1).

3. The filter device according to any of the preceding claims, **characterised in that** the connection fitting (29) in the connecting piece (23) is fixed by a screw union (33).

4. The filter device according to any of the preceding claims, **characterised in that** the tank (1) together with the filter bowl (13) which forms an integral component of it is moulded out of plastic.

5. The filter device according to any of the preceding claims, **characterised in that** the filter bowl (13) which is open on the top (15) of the tank can be closed by a plastic cover (49) which can be screwed to an internal thread (51) located in the opening edge region of the filter bowl (13) such that the cover (49) with its outside forms a part of the upper tank wall.

6. The filter device according to any of the preceding claims, **characterised in that** the connection unit (29) is intended for the supply of the fluid to be cleaned to the dirty side (41) of the filter element (37) and is a component of the element receiver with which the filter element (37) which is in the operating position interacts, and that the filter element (37) has a valve arrangement (61; 67, 69) which normally closes the inlet to its dirty side (41) and which can be opened when the filter element (37) is attached to the element receiver.

7. The filter device according to any of the preceding claims, **characterised in that** a filter element (37) through which flow can take place from its inner filter cavity (41) to the outside of its filter medium (39) during filtration is provided with at least one end cap (35) and that this end cap (35) which is the lower one in the operating position for the interaction with the element receiver has an inlet fitting (43) which projects into the filter cavity (41), to which the valve arrangement (61; 67, 69) is attached and which in the operating position engages a connection fitting (29) of the connection unit as a component of the element receiver with sealing (45).

8. The filter device according to any of the preceding claims, **characterised in that** to form the valve arrangement the inner end of the inlet fitting (43) is spanned by a cap (61) of elastomer material which is provided with notches (63) such that the connection fitting (29) of the connection unit, which fitting penetrates the inlet fitting (43) in the operating position, by mechanical action on the cap (61) opens its notches (63) to form flow slots.

9. The filter device according to any of the preceding claims, **characterised in that** the valve arrangement on the inlet fitting (43) has a movable valve body (67) which is pretensioned by mechanical closing force (69) into the closed position which blocks the inlet fitting (43) and, when the filter element (37) is attached to the element receiver, it can be moved out of the closed position by the mechanical action of the connection fitting (29) against the closing force (69).

## Revendications

1. Dispositif de filtration ayant au moins un élément (37) filtrant, qui peut être reçu dans un corps de filtre, en communication fluidique avec une cuve (1) à fluide et ayant au moins un dispositif (29) de raccordement pour former une liaison fluidique avec l'élément (37) filtrant, le corps du filtre étant formé par un pot (13) de filtre, qui est incorporé dans la cuve (1) et au fond (17) duquel se trouve le dispositif (29) de raccordement associé au logement de l'élément, **caractérisé en ce qu'**il est formé, au fond (17) du pot (13) de filtre, une pièce (23) de liaison formant un passage pour la tubulure (29) de raccordement , d'un seul tenant avec une partie (5) de paroi du côté du fond de la cuve (1), à travers laquelle la tubulure (29) de raccordement s'étend du côté extérieur de la cuve au pot (13) de filtre.

2. Dispositif de filtration suivant la revendication 1, **caractérisé en ce que** la partie (5) de paroi, voisine de la pièce (23) de liaison, de la cuve (1) se trouve dans une bosse rentrante (25) locale s'étendant du fond de la cuve (1) vers le haut.

3. Dispositif de filtration suivant l'une des revendications précédentes, **caractérisé en ce que** la tubulure (29) de raccordement est fixée dans la pièce (23) de liaison par un vissage (33).

4. Dispositif de filtration suivant l'une des revendications précédentes, **caractérisé en ce que** la cuve (1) est, ensemble avec le pot (13) de filtre formant une partie intégrale de celle-ci, en matière plastique.

5. Dispositif de filtration suivant l'une des revendications précédentes, **caractérisé en ce que** le pot (13) de filtre ouvert du côté (15) supérieur de la cuve peut être fermé par un couvercle (49) en matière plastique, qui peut se visser par un taraudage (51) se trouvant à la partie de bord de l'ouverture du pot (13) du filtre, de manière à ce que le couvercle (49) forme, par son côté extérieur, une partie de la paroi supérieure de la cuve.

6. Dispositif de filtration suivant l'une des revendications précédentes, **caractérisé en ce que** le dispositif (29) de raccordement est prévu pour l'apport du fluide à épurer au côté (41) brut de l'élément (37) filtrant et fait partie du logement de l'élément avec lequel l'élément (37) filtrant se trouvant en position de fonctionnement coopère et **en ce que** l'élément (37) filtrant a un agencement (61; 67; 69) de vanne, qui ferme normalement l'entrée vers son côté (41) brut et qui peut, lorsque l'élément (37) filtrant est mis sur le logement de l'élément, être ouvert.

7. Dispositif de filtration suivant l'une des revendications précédentes, **caractérisé en ce qu'**il est prévu un élément (37) filtrant pouvant être traversé à la filtration de sa cavité (41) intérieure de filtre vers le côté extérieur de son milieu (39) filtrant et qui a au moins une coiffe (35) d'extrémité et **en ce que** cette coiffe (35) d'extrémité inférieure possède, en position de fonctionnement, pour la coopération avec le logement de l'élément, une tubulure (43) d'entrée, qui pénètre dans la cavité (41) du filtre, sur laquelle est monté l'agencement (61; 67; 69) de vanne et dans laquelle, en la position de fonctionnement, une tubulure (29) de raccordement du dispositif de raccordement pénètre avec étanchéité (45) en tant qu'élément constitutif du logement de l'élément.

8. Dispositif de filtration suivant l'une des revendications précédentes, **caractérisé en ce que**, pour former l'agencement de vanne, l'extrémité intérieure de la tubulure (43) d'entrée est recouverte d'un capuchon (61) en matériau élastomère, qui est pourvu d'entailles (63), de manière à ce que la tubulure (29) de raccordement, pénétrant en la position de fonctionnement dans la tubulure (43) d'entrée, du dispositif de raccordement, ouvre, par effet mécanique sur le capuchon (61), ses entailles (63) en des fentes de passage.

9. Dispositif de filtration suivant l'une des revendications précédentes, **caractérisé en ce que** l'agencement de vanne sur la tubulure (43) d'entrée a un obturateur (67) mobile, qui est précontraint par une force (69) de fermeture mécanique dans la position de fermeture obturant la tubulure (43) d'entrée qui, lorsque l'élément (37) filtrant est mis sur le logement de l'élément, peut se déplacer hors de la position de fermeture par action mécanique de la tubulure (29) de raccordement à l'encontre de la force (69) de fermeture.
